# EUROPEAN PATENT APPLICATION

(11) **EP 4 716 031 A1**
(43) Date of publication of application: **25.03.2026**
(21) Application number: 25191053.5
(22) Date of filing: 22.07.2025
(51) Int. Cl.: H01R 43/00, H01R 13/66, H01R 12/70, H01R 12/73, G06F 1/18, H04M 1/02, H05K 3/30, H05K 5/00, H01R 24/60, H01R 12/71

(54) **REPAIRABLE CONNECTOR**

(30) Priority: 19.09.2024 JP 2024162189
(71) Applicant: Japan Aviation Electronics Industry, Ltd., Tokyo 150-0043 (JP)
(72) Inventor: MATSUNAGA, Akihiro, Tokyo (JP)
(74) Representative: INNOV-GROUP

(57) **Abstract**

A repairable connector (1) includes a connector module (10) and a bracket (11) mounted on the connector module (10). The connector module (10) includes a receptacle connector (13) configured to be mated with a plug connector (6) from outside an enclosure (4), a module substrate (12) on which the receptacle connector (13) is mounted, and a board-to-board connector (14) that is mounted on the module substrate (12) and electrically connected to the receptacle connector (13) via the module substrate (12). The bracket (11) includes a barrel portion (40) and a support portion (41). The support portion (41) is configured to be fixed to an internal circuit board (2).

## Description

### BACKGROUND

The present disclosure relates to a repairable connector.

Patent Literature 1, as illustrated in Fig. 15 of the present application, discloses an electrical connector assembly 107 including a first connector 102, which comprises a board-to-board connector 101 provided on a flexible circuit board 100, and a second connector 106, which comprises a board-to-board connector 104 and a USB 3.2 Type-C interface 105 provided on a rigid circuit board 103. The board-to-board connector 104 mates with the board-to-board connector 101.

[Patent Literature 1] Japanese Unexamined Patent Application Publication No. 2022-106648

### SUMMARY

In the configuration disclosed in Patent Literature 1, when the plug connector mated with the interface 105 is subjected to external forces applied in various directions, such as prying or twisting, there is a risk that the interface 105 may be damaged.

An object of the present disclosure is to provide a repairable connector that is resistant to damage even when the plug connector is subjected to external forces applied in various directions, such as prying or twisting.

There is provided a repairable connector detachably mounted on an internal circuit board disposed within an enclosure of an electronic device. The repairable connector includes a connector module and a bracket mounted on the connector module. The connector module includes a receptacle connector configured to be mated with a plug connector from outside the enclosure, a module substrate on which the receptacle connector is mounted, and a board-to-board connector electrically connected to the receptacle connector via the module substrate by being mounted on the module substrate. The bracket includes a barrel portion that annularly surrounds the plug connector mated with the receptacle connector to maintain an orientation of the plug connector mated with the receptacle connector, and a support portion integrally formed with the barrel portion. The support portion is disposed on a side of the board-to-board connector opposite to the internal circuit board when the repairable connector is mounted on the internal circuit board, and is configured to be fixed to the internal circuit board.

According to the present disclosure, a repairable connector that is resistant to damage even when the plug connector is subjected to external forces applied in various directions, such as prying or twisting, can be realized.

The above and other objects, features and advantages of the present disclosure will become more fully understood from the detailed description given hereinbelow and the accompanying drawings.

### BRIEF DESCRIPTION OF DRAWINGS

Fig. 1 is a perspective view showing the repairable connector mounted on the internal circuit board (First embodiment);
Fig. 2 is a perspective view showing the repairable connector removed from the internal circuit board (First embodiment);
Fig. 3 is a perspective view showing the internal circuit board separated from the enclosure (First embodiment);
Fig. 4 is a perspective view of the repairable connector (First embodiment);
Fig. 5 is a perspective view of the repairable connector seen from another angle (First embodiment);
Fig. 6 is an exploded perspective view of the repairable connector (First embodiment);
Fig. 7 is an exploded perspective view of the connector module (First embodiment);
Fig. 8 is an exploded perspective view of the receptacle connector (First embodiment);
Fig. 9 is a partially cutaway perspective view of the board-to-board connector (First embodiment);
Fig. 10 is a perspective view of the internal circuit board and the connector module (Second embodiment);
Fig. 11 is a perspective view of the connector module (Third embodiment);
Fig. 12 is a perspective view showing the repairable connector removed from the internal circuit board (Fourth embodiment);
Fig. 13 is a perspective view of the repairable connector (Fourth embodiment);
Fig. 14 is a partially cutaway perspective view of the connector module (Fifth embodiment); and

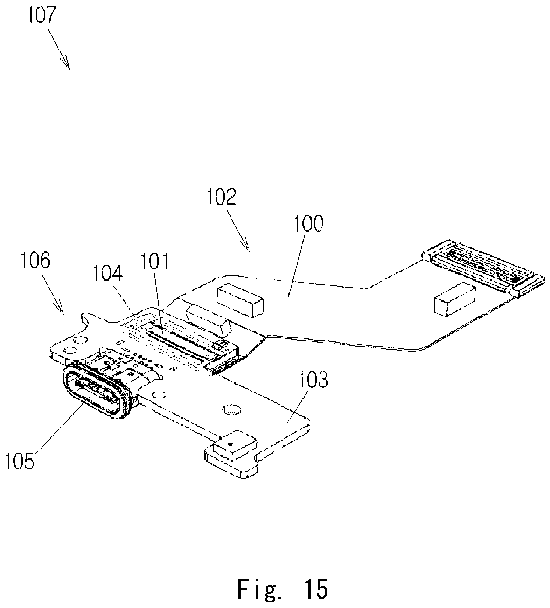

Fig. 15 is a simplified version of Fig. 1 of Patent Literature 1.

### DESCRIPTION OF EMBODIMENTS

Hereinafter, the present invention will be described through embodiments. However, the invention according to the claims is not limited to the embodiments described below. In addition, not all of the configurations described in the embodiments are necessarily essential as means for solving the problems. For clarity of explanation, the following description and drawings are partially omitted or simplified as appropriate. In the drawings, the same reference numerals are given to the same elements, and redundant explanation is omitted as needed.

In the following embodiments, for convenience of explanation, the description may be divided into a plurality of sections or embodiments when necessary. Unless explicitly stated otherwise, these are not independent of each other, but may be related as modifications, applications, detailed explanations, or supplementary explanations of one another. Further, in the following embodiments, when referring to numerical values such as the number, amount, quantity, or range of components, unless explicitly specified or clearly limited to a specific number in principle, such numbers are not limited to the specified values, and may include values greater or less than the stated ones.

Furthermore, in the following embodiments, unless explicitly stated or clearly considered essential in principle, each component (including operational steps and the like) is not necessarily essential. Likewise, when referring to the shape, positional relationship, or the like of components, unless explicitly stated or clearly considered otherwise in principle, such descriptions shall be construed to include substantially similar or approximate configurations. The same applies to numerical references such as the number, value, quantity, or range.

### (First Embodiment)

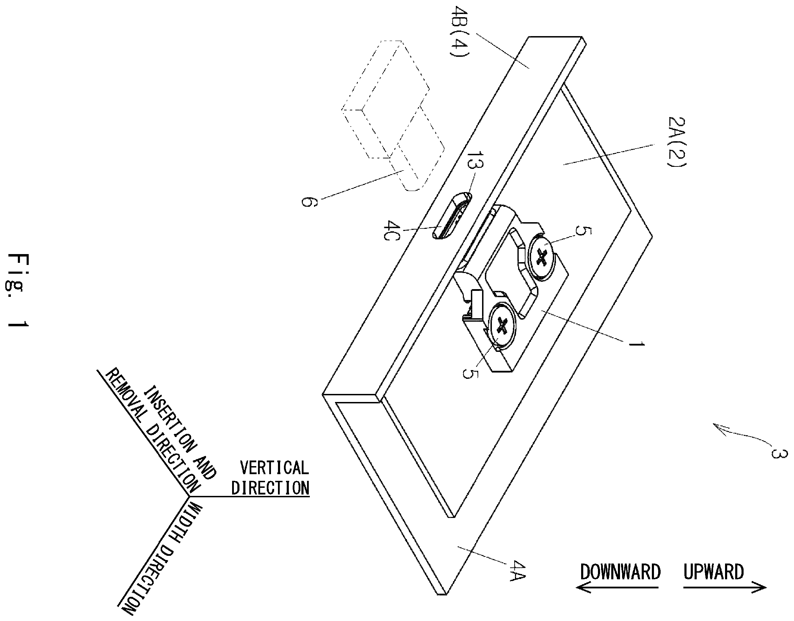

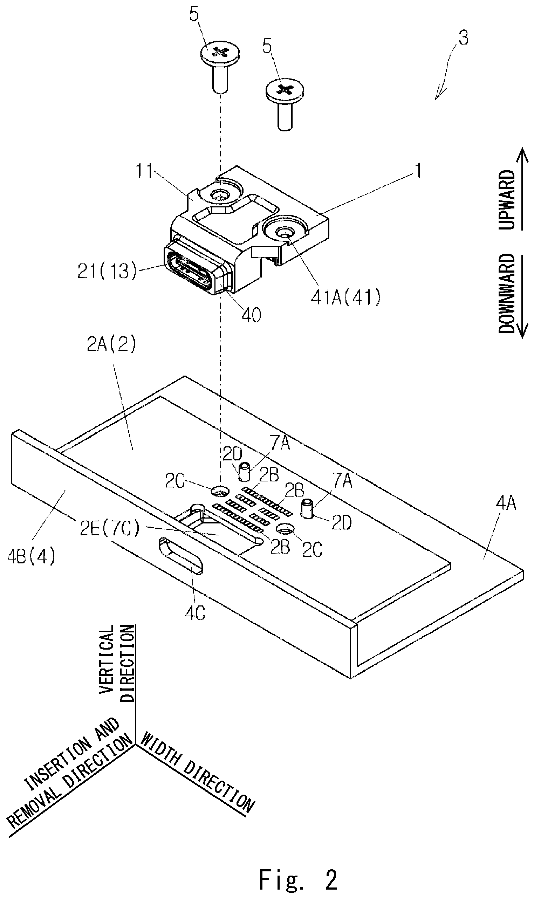

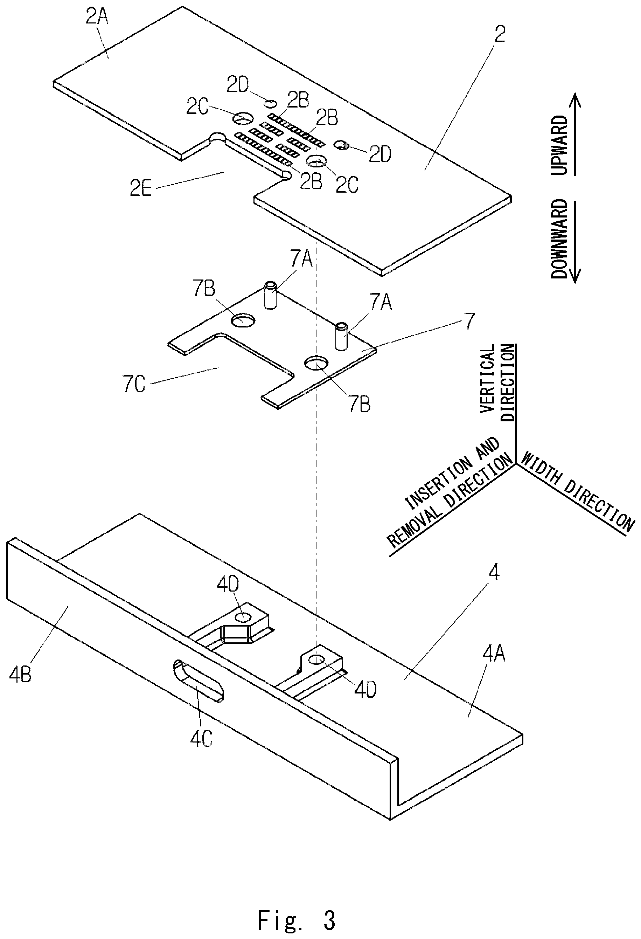

A first embodiment of the present disclosure will now be described with reference to Figs. 1 to 9. Fig. 1 is a perspective view showing the repairable connector 1 mounted on the internal circuit board 2. Fig. 2 is a perspective view showing the repairable connector 1 removed from the internal circuit board 2. Fig. 3 is a perspective view showing the internal circuit board 2 separated from the enclosure 4.

As shown in Figs. 1 and 2, the repairable connector 1 is detachably mounted on a connector mounting surface 2A of the internal circuit board 2, which is disposed within the enclosure 4 of the electronic device 3. The repairable connector 1 is replaceably housed within the enclosure 4 of the electronic device 3. Typically, the repairable connector 1 is mounted to the connector mounting surface 2A of the internal circuit board 2 by screw fastening using two screws 5. This enables the owner of the electronic device 3 to detachably mount the repairable connector 1 to the connector mounting surface 2A of the internal circuit board 2 by themselves, thereby securing the right to repair the repairable connector 1.

The electronic device 3 is typically a portable terminal, such as a laptop computer, tablet device, or smartphone; however, it may alternatively be a stationary terminal, such as a desktop computer.

The enclosure 4 includes a board support portion 4A for supporting the internal circuit board 2 and a sidewall portion 4B that extends upward from the board support portion 4A. The internal circuit board 2 is typically fixed to the board support portion 4A by screw fastening (not shown). A mating hole 4C is formed in the sidewall portion 4B for allowing a plug connector 6, serving as an external connector, to mate with the repairable connector 1.

Here, with reference to Fig. 1, the terms "insertion and removal direction," "vertical direction," and "width direction" are defined. The insertion and removal direction, vertical direction, and width direction are mutually orthogonal directions.

The insertion and removal direction refers to the direction in which the plug connector 6 is inserted into or removed from the repairable connector 1. The insertion and removal direction includes a mating direction and a removal direction. The mating direction is the direction in which the plug connector 6 is brought closer to the repairable connector 1 when being mated. The removal direction is the direction in which the plug connector 6 is moved away from the repairable connector 1 when being removed.

The vertical direction refers to a direction orthogonal to the connector mounting surface 2A of the internal circuit board 2. The vertical direction includes an upward direction and a downward direction. The upward direction is the direction that the connector mounting surface 2A of the internal circuit board 2 faces. The downward direction is the opposite of the upward direction. The terms "upward" and "downward" are used merely for convenience in explanation and do not define the orientation of the electronic device 3 during use.

The width direction, as described above, is orthogonal to both the insertion and removal direction and the vertical direction. The width direction includes an inward direction in the width direction and an outward direction in the width direction. The inward direction in the width direction is the direction toward the center of the repairable connector 1 in the width direction. The outward direction is the direction away from the center of the repairable connector 1 in the width direction.

With continued reference to Fig. 3, a positioning member 7 is disposed between the internal circuit board 2 and the enclosure 4. The positioning member 7 includes two positioning pins 7A that protrude upward, two screw holes 7B, and a notch 7C. The two positioning pins 7A, the two screw holes 7B, and the notch 7C are arranged in this order along the removal direction.

The internal circuit board 2 is typically a rigid board. The rigid board is, for example, a paper phenolic board or a glass epoxy board. A plurality of electrode pads 2B are provided on the connector mounting surface 2A of the internal circuit board 2. The internal circuit board 2 includes two screw holes 2C arranged to sandwich the electrode pads 2B in the width direction. The internal circuit board 2 also includes two positioning holes 2D arranged to sandwich the electrode pads 2B in the width direction. The two positioning pins 7A of the positioning member 7 are inserted into the two positioning holes 2D of the internal circuit board 2. In this state, the two screw holes 2C of the internal circuit board 2 are aligned with the two screw holes 7B of the positioning member 7. The internal circuit board 2 further includes a notch 2E, which is formed between the electrode pads 2B and the sidewall portion 4B of the enclosure 4. The notch 2E is positioned to correspond to the notch 7C of the positioning member 7.

Two female screw holes 4D are formed in the board support portion 4A of the enclosure 4. The two female screw holes 4D are aligned with the two screw holes 7B of the positioning member 7.

Instead of the positioning member 7 having the two positioning pins 7A, the positioning member 7 may be omitted, and the board support portion 4A of the enclosure 4 may be provided with equivalent positioning pins.

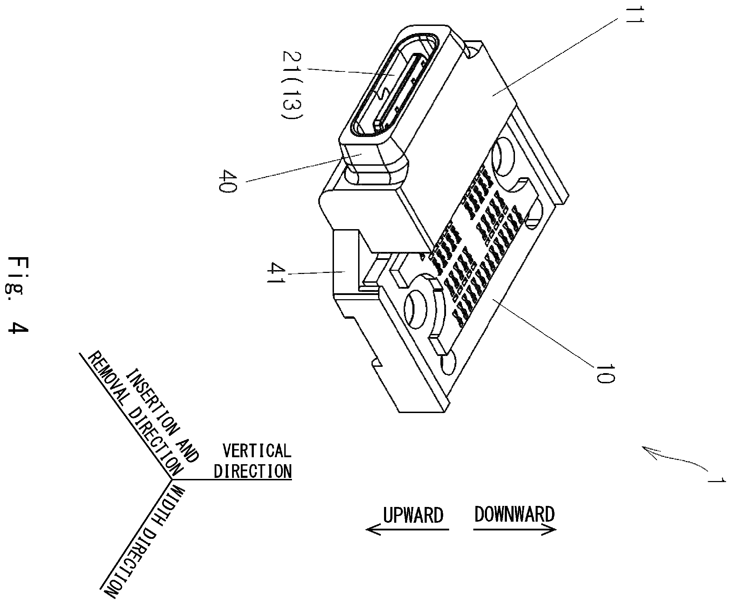

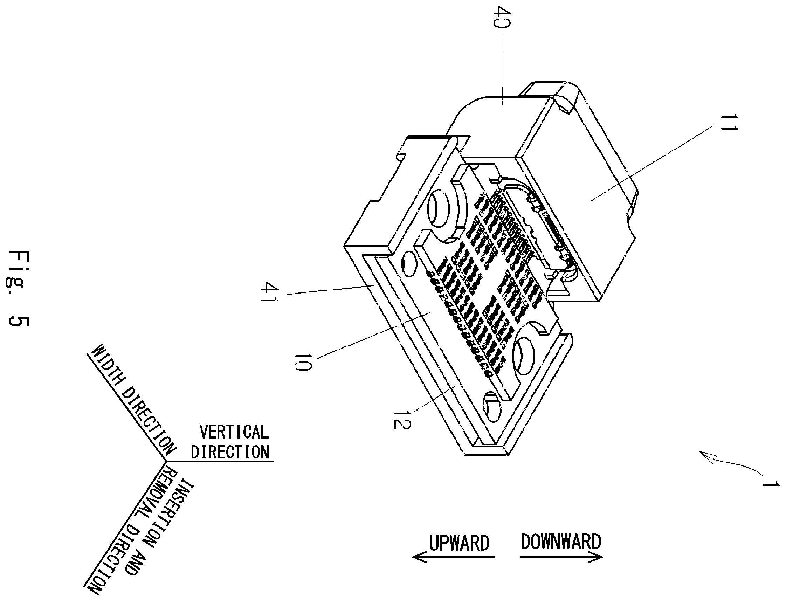

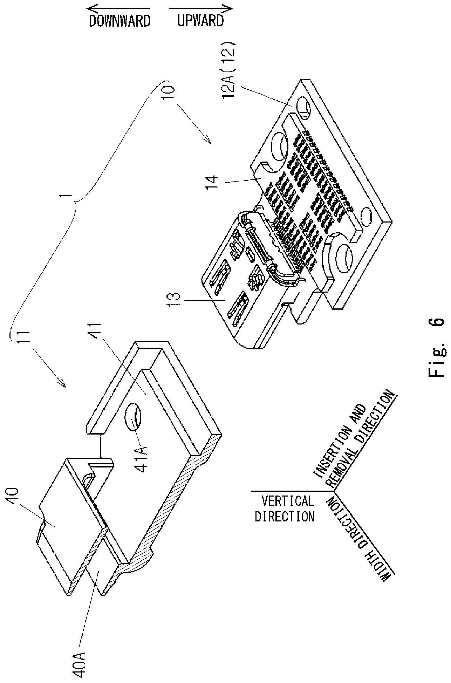

Next, the repairable connector 1 will be described in detail with reference to Figs. 4 to 9. Figs. 4 and 5 are perspective views of the repairable connector 1. Fig. 6 is an exploded perspective view of the repairable connector 1. As shown in Figs. 4 to 6, the repairable connector 1 includes a connector module 10 and a bracket 11 mounted on the connector module 10.

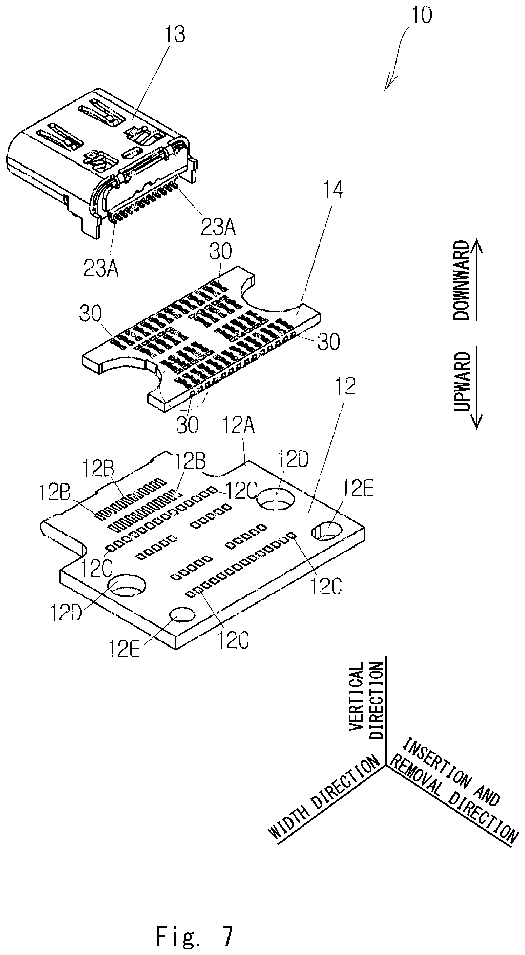

Fig. 7 is an exploded perspective view of the connector module 10. As shown in Figs. 6 and 7, the connector module 10 includes a module substrate 12, a receptacle connector 13, and a board-to-board connector 14.

The module substrate 12 is typically a rigid board. However, alternatively, the module substrate 12 may be a flexible board. As shown in Fig. 7, the module substrate 12 has a connector mounting surface 12A on which the receptacle connector 13 and the board-to-board connector 14 are mounted. The receptacle connector 13 and the board-to-board connector 14 are surface-mounted on the connector mounting surface 12A of the module substrate 12 so as to be adjacent to each other in the insertion and removal direction. The receptacle connector 13 and the board-to-board connector 14 are arranged in this order along the mating direction. The receptacle connector 13 and the board-to-board connector 14 are separate components, and are spaced apart from each other in the insertion and removal direction.

On the connector mounting surface 12A of the module substrate 12, a plurality of electrode pads 12B for the receptacle connector 13 and a plurality of electrode pads 12C for the board-to-board connector 14 are formed. The module substrate 12 includes two screw holes 12D and two positioning holes 12E. The two screw holes 12D are formed so as to sandwich the electrode pads 12C in the width direction. The two positioning holes 12E are also formed so as to sandwich the electrode pads 12C in the width direction.

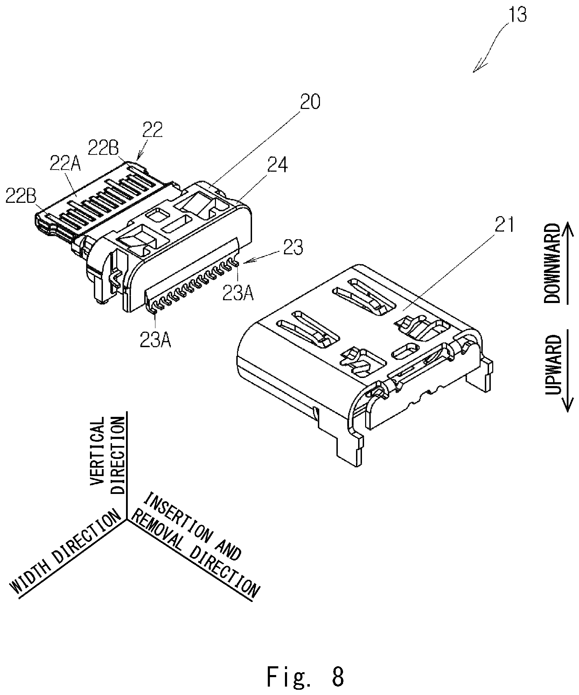

Fig. 8 is an exploded perspective view of the receptacle connector 13. As shown in Fig. 8, the receptacle connector 13 of the present embodiment is a 24-pin connector conforming to the USB Type-C form factor. Alternatively, the receptacle connector 13 may have 16 pins, 14 pins, or 6 pins. Furthermore, the receptacle connector 13 may be a connector conforming to another form factor, such as USB Type-A, USB Type-B, mini USB Type-B, Micro USB Type-B, or Lightning.

The receptacle connector 13 includes a connector body 20 and a metal shell 21.

The connector body 20 includes a contact portion 22, a soldering portion 23, and a housing 24 made of insulating resin. The contact portion 22 is the part that electrically contacts the plug connector 6 shown in Fig. 1, and is formed by arranging a plurality of electrode pads 22B on a rigid board 22A. The soldering portion 23 includes a plurality of contacts 23A, each of which is soldered to a corresponding one of the electrode pads 12B on the module substrate 12 shown in Fig. 7. The contacts 23A are electrically connected to the electrode pads 22B of the contact portion 22. The housing 24 holds the contact portion 22 and the soldering portion 23. Note that, for simplification, the electrode pads 22B are illustrated in Fig. 8 as being connected in a continuous manner. Similarly, for simplification, the contacts 23A are also illustrated as being connected in a continuous manner.

The shell 21 is an electromagnetic shield that covers the connector body 20. The shell 21 has functions of guiding the plug connector 6 in the insertion and removal direction when the plug connector 6 shown in Fig. 1 mates with the receptacle connector 13, maintaining the orientation of the plug connector 6 mated with the receptacle connector 13, and positioning the plug connector 6 in a plane orthogonal to the insertion and removal direction. Accordingly, the plug connector 6 is housed within the shell 21 when mated with the receptacle connector 13.

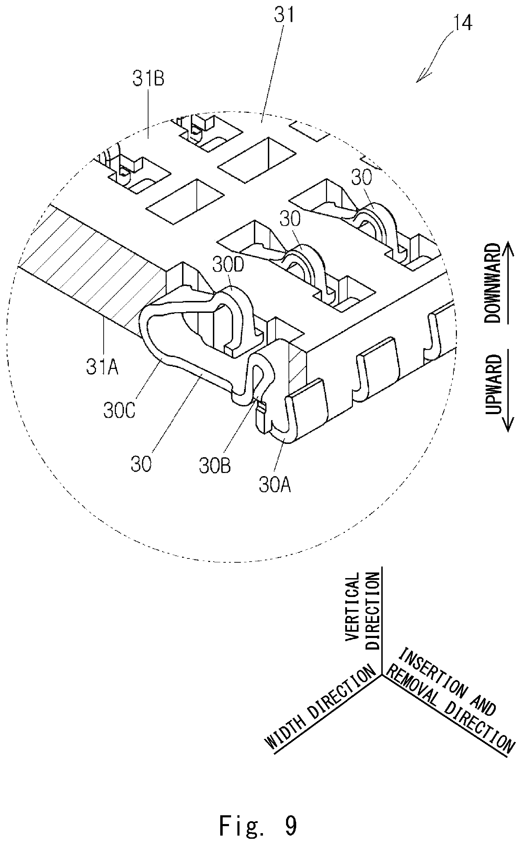

Fig. 9 is a partially cutaway perspective view of the board-to-board connector 14. The board-to-board connector 14 electrically connects the module substrate 12 and the internal circuit board 2 in a state in which the module substrate 12 and the internal circuit board 2 are parallel to each other. As shown in Fig. 9, the board-to-board connector 14 includes a plurality of contacts 30 and a flat housing 31 that holds the contacts 30. The board-to-board connector 14 is a so-called compression-type connector that is electrically connected to the internal circuit board 2 by being pressed against the internal circuit board 2.

The plurality of contacts 30 are typically formed by press-working copper or a copper alloy. The housing 31 is typically formed by injection-molding an insulating resin.

As shown in Fig. 6, the housing 31 has a module-substrate-facing surface 31A that faces the connector mounting surface 12A of the module substrate 12 when the board-to-board connector 14 is surface-mounted on the connector mounting surface 12A, and as shown in Fig. 1, a circuit-board-facing surface 31B that faces the connector mounting surface 2A of the internal circuit board 2 when the repairable connector 1 is mounted thereon.

As shown in Fig. 7, each contact 30 includes a soldering portion 30A soldered to a corresponding electrode pad 12C formed on the connector mounting surface 12A of the module substrate 12; a fixing portion 30B that is typically fixed to the housing 31 by press-fitting; and a spring portion 30C that is cantilevered from the fixing portion 30B. The spring portion 30C includes a contact portion 30D that protrudes downward from the circuit-board-facing surface 31B of the housing 31 in a state before the repairable connector 1 is mounted on the internal circuit board 2. The contact portion 30D is configured to move up and down with elastic deformation of the spring portion 30C. Thus, each contact 30 is elastically displaceable in the thickness direction of the housing 31. When the repairable connector 1 is mounted on the connector mounting surface 2A of the internal circuit board 2 as shown in Fig. 1, the contact portion 30D comes into contact with the corresponding electrode pad 2B of the internal circuit board 2 as shown in Fig. 3 with elastic deformation of the spring portion 30C. That is, the board-to-board connector 14 is electrically connected to the connector mounting surface 2A of the internal circuit board 2 by being pressed against the connector mounting surface 2A against the spring restoring force of the spring portions 30C.

As shown in Fig. 7, the plurality of contacts 23A of the receptacle connector 13 and the plurality of contacts 30 of the board-to-board connector 14 are electrically connected to each other via a circuit (not shown) on the module substrate 12.

By configuring the receptacle connector 13 and the board-to-board connector 14 as separate components in this manner, the contacts 30 of the board-to-board connector 14 can be designed with high flexibility. For example, by adjusting the thickness of each contact 30, the required spring property of each contact 30 can be ensured, and the transmission path length of each contact 30 can be minimized as much as possible.

Returning to Fig. 6, the bracket 11 includes a barrel portion 40 and a support portion 41. The barrel portion 40 and the support portion 41 are integrally formed. The bracket 11 is formed as a single part. The barrel portion 40 and the support portion 41 are arranged in this order along the mating direction.

The bracket 11 is typically made of either insulating resin or metal. When made of insulating resin, the bracket 11 may be formed, for example, by injection molding or machining of materials such as polybutylene terephthalate (PBT), polyphenylene sulfide (PPS), nylon resin, or liquid crystal polymer (LCP). When made of metal, the bracket 11 may be formed, for example, by metal injection molding (MIM) or machining of stainless steel, or by die casting of a zinc alloy.

A housing space 40A for accommodating the receptacle connector 13 is formed in the barrel portion 40. The housing space 40A extends in the insertion and removal direction. The barrel portion 40 is annularly shaped so as to surround the receptacle connector 13 when viewed along the insertion and removal direction. In other words, the barrel portion 40 annularly surrounds the plug connector 6 that is mated with the receptacle connector 13, thereby maintaining the orientation of the plug connector 6 mated with the receptacle connector 13. By covering the receptacle connector 13, the barrel portion 40 protects the shell 21 and the contact portion 22 of the receptacle connector 13, as shown in Fig. 8. Moreover, by annularly surrounding the shell 21, as shown in Fig. 4, the barrel portion 40 enhances the functions of the shell 21, namely: guiding the plug connector 6 in the insertion and removal direction; maintaining the orientation of the plug connector 6 mated with the receptacle connector 13; and positioning the plug connector 6 in a plane orthogonal to the insertion and removal direction. In other words, the barrel portion 40 provides these guiding, orientation-maintaining, and positioning functions. With the orientation-maintaining function, even if the plug connector 6 mated with the receptacle connector 13 is subjected to external forces applied in various directions, such as prying or twisting, the receptacle connector 13 is less likely to be damaged.

As shown in Figs. 4 to 6, in the present embodiment, the housing space 40A of the barrel portion 40 is formed to accommodate the entire length of the receptacle connector 13 in the insertion and removal direction. Alternatively, the housing space 40A of the barrel portion 40 may be formed to accommodate only a tip portion of the receptacle connector 13 on the disengagement side.

The support portion 41 is a flat plate and, as shown in Fig. 1, is disposed on the opposite side of the internal circuit board 2 across the board-to-board connector 14 when the repairable connector 1 is mounted on the connector mounting surface 2A of the internal circuit board 2. As shown in Fig. 5, the support portion 41 substantially contacts the module substrate 12 of the connector module 10 without gaps when the bracket 11 is mounted on the connector module 10. As shown in Fig. 6, the support portion 41 includes two screw holes 41A. Note that only one of the two screw holes 41A is illustrated in Fig. 6.

As shown in Figs. 5 and 6, the connector module 10 is mounted on the bracket 11 by sliding in the removal direction. This enables the connector module 10 to be fixed to the bracket 11. The fixing means may include, for example, press-fitting, soldering, welding, or other suitable methods.

As shown in Figs. 1 to 3, in order to mount the repairable connector 1 on the connector mounting surface 2A of the internal circuit board 2, the two positioning pins 7A of the positioning member 7 shown in Fig. 2 are inserted into the two positioning holes 12E of the module substrate 12 shown in Fig. 7. In this state, the repairable connector 1 is fixed to the internal circuit board 2 by screw fastening. Specifically, as shown in Fig. 2, the two screws 5 are inserted into the two screw holes 41A of the support portion 41 of the bracket 11 and screwed into the two female screw holes 4D of the enclosure 4 shown in Fig. 3. In this case, the screws 5 pass through the two screw holes 12D of the module substrate 12 of the connector module 10 shown in Fig. 7, the two screw holes 2C of the internal circuit board 2 shown in Fig. 3, and the two screw holes 7B of the positioning member 7. By fixing the support portion 41 of the bracket 11 to the connector mounting surface 2A of the internal circuit board 2 in this manner, the board-to-board connector 14 is pressed against the connector mounting surface 2A of the internal circuit board 2. As a result, the contacts 30 of the board-to-board connector 14 electrically contact the electrode pads 2B of the internal circuit board 2 with high contact reliability.

As shown in Fig. 1, when the repairable connector 1 is mounted on the connector mounting surface 2A of the internal circuit board 2, the plug connector 6 is mated with the receptacle connector 13 of the repairable connector 1 through the mating hole 4C. When the plug connector 6 is mated with the receptacle connector 13 and subjected to external forces applied in various directions (such as prying or twisting), a force acts in a plane orthogonal to the insertion and removal direction on the receptacle connector 13. As shown in Fig. 2, this force is transmitted sequentially through the shell 21 of the receptacle connector 13, the barrel portion 40, and the support portion 41 of the repairable connector 1, and is received by the internal circuit board 2. In other words, the external force is dispersed and received by the shell 21 of the receptacle connector 13 of the repairable connector 1, the barrel portion 40, the support portion 41, and the internal circuit board 2. Accordingly, the repairable connector 1 is resistant to damage even when the plug connector 6 is subjected to such forces. In particular, the configuration effectively suppresses damage to the contact portion 22 of the connector body 20 of the receptacle connector 13, as shown in Fig. 8.

As shown in Figs. 1 and 2, when mounting the repairable connector 1 on the connector mounting surface 2A of the internal circuit board 2, the barrel portion 40 must be securely fixed to the internal circuit board 2 in order to withstand prying of the plug connector 6. To this end, for example, in addition to fixing the support portion 41 to the internal circuit board 2 with screws, the barrel portion 40 itself may also be screwed to the internal circuit board 2. However, in that case, four screws would be required to mount the repairable connector 1 on the connector mounting surface 2A of the internal circuit board 2, which would complicate replacement of the repairable connector 1.

In contrast, in the present embodiment, as shown in Fig. 2, the support portion 41 is screwed to the internal circuit board 2, and the support portion 41 is integrally formed with the barrel portion 40. Thus, the barrel portion 40 is securely fixed to the connector mounting surface 2A of the internal circuit board 2 via the support portion 41. Therefore, it is not necessary to screw the barrel portion 40 directly to the internal circuit board 2 to securely fix the barrel portion 40 to the internal circuit board 2. In this way, the repairable connector 1 can be mounted on the connector mounting surface 2A of the internal circuit board 2 with a reduced number of screws.

It should be noted, however, that the support portion 41 of the repairable connector 1 may be fixed to the connector mounting surface 2A of the internal circuit board 2 not only by screw fastening, but also, for example, by snap fitting.

The first embodiment of the present disclosure has been described above, and this first embodiment includes the following features:

As shown in Figs. 1 and 2, the repairable connector 1 is detachably mounted on an internal circuit board 2 disposed within an enclosure 4 of an electronic device 3. As shown in Fig. 6, the repairable connector 1 includes a connector module 10 and a bracket 11 mounted on the connector module 10. The connector module 10 includes a receptacle connector 13 configured to be mated with a plug connector 6 from outside the enclosure 4, a module substrate 12 on which the receptacle connector 13 is mounted, and a board-to-board connector 14 mounted on the module substrate 12 and electrically connected to the receptacle connector 13 via the module substrate 12. The bracket 11 includes a barrel portion 40 that annularly surrounds the plug connector 6 mated with the receptacle connector 13 to maintain an orientation of the plug connector 6 mated with the receptacle connector 13, and a support portion 41 integrally formed with the barrel portion 40. When the repairable connector 1 is mounted on the internal circuit board 2, the support portion 41 is disposed on the opposite side of the board-to-board connector 14 from the internal circuit board 2 and is fixed to the internal circuit board 2. With this configuration, the repairable connector 1 is resistant to damage even when the plug connector 6 is subjected to external forces applied in various directions, such as prying or twisting.

As shown in Fig. 2, the barrel portion 40 positions the plug connector 6 in a plane orthogonal to the mating direction in which the plug connector 6 is mated with the receptacle connector 13. This configuration enables high-precision positioning of the plug connector 6 in the orthogonal plane.

As shown in Fig. 6, the module substrate 12 has a connector mounting surface 12A on which the receptacle connector 13 is mounted, and the board-to-board connector 14 is also mounted on the connector mounting surface 12A. This configuration contributes to a reduction in the height of the repairable connector 1 compared to a configuration in which the receptacle connector 13 and the board-to-board connector 14 are mounted on opposite surfaces of the module substrate 12.

The receptacle connector 13 and the board-to-board connector 14 are mounted adjacent to each other in the mating direction on the connector mounting surface 12A of the module substrate 12. This configuration contributes to a reduction in width of the repairable connector 1.

The module substrate 12 is a rigid substrate. This configuration allows the repairable connector 1 to be manufactured at lower cost compared to a configuration using a flexible substrate.

The board-to-board connector 14 electrically connects the module substrate 12 and the internal circuit board 2 in a state where both are parallel to each other. This configuration contributes to reducing the overall height of the electronic device 3.

The board-to-board connector 14 includes a flat housing 31 and a plurality of contacts 30 held by the housing 31. This configuration contributes to lowering the profile of the board-to-board connector 14.

As shown in Figs. 1 and 2, the support portion 41 is detachably fixed to the internal circuit board 2 by screw fastening. This configuration allows the owner of the electronic device 3 to easily replace the repairable connector 1.

As shown in Fig. 6, the bracket 11 is made of metal. This configuration allows the bracket 11 to have high rigidity, thereby reducing the likelihood of damage to the bracket 11 when the plug connector 6 is subjected to external forces such as prying.

### (Second Embodiment)

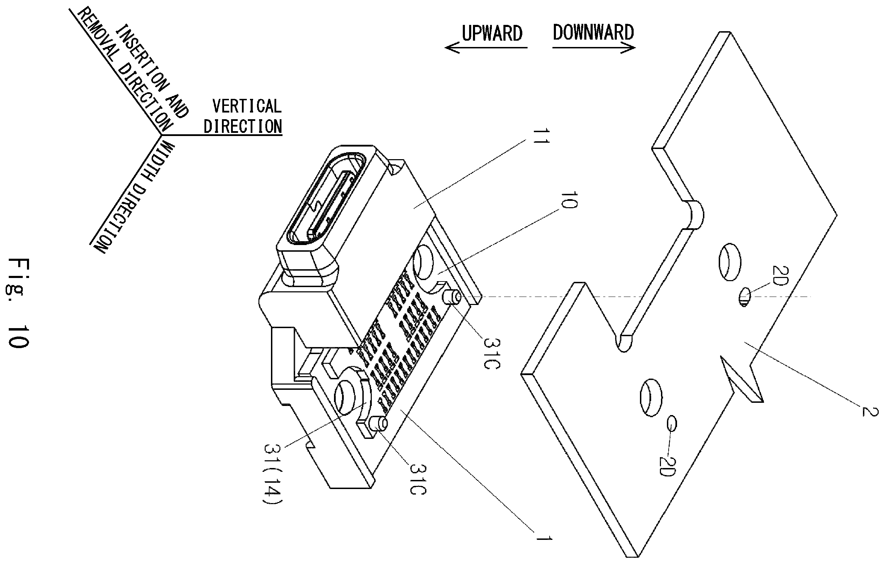

Next, a second embodiment of the present disclosure will be described with reference to Fig. 10. In the following, the differences between this embodiment and the first embodiment described above will be mainly explained, and redundant descriptions will be omitted.

In the first embodiment, as shown in Figs. 2 and 3, the two positioning pins 7A are formed on the positioning member 7 to position the internal circuit board 2 and the repairable connector 1 with respect to each other.

In contrast, in this embodiment, as shown in Fig. 10, two positioning pins 31C are formed on the housing 31 of the board-to-board connector 14 of the connector module 10 of the repairable connector 1, to position the internal circuit board 2 and the repairable connector 1 with respect to each other. Accordingly, the positioning member 7 shown in Fig. 3 can be omitted.

### (Third Embodiment)

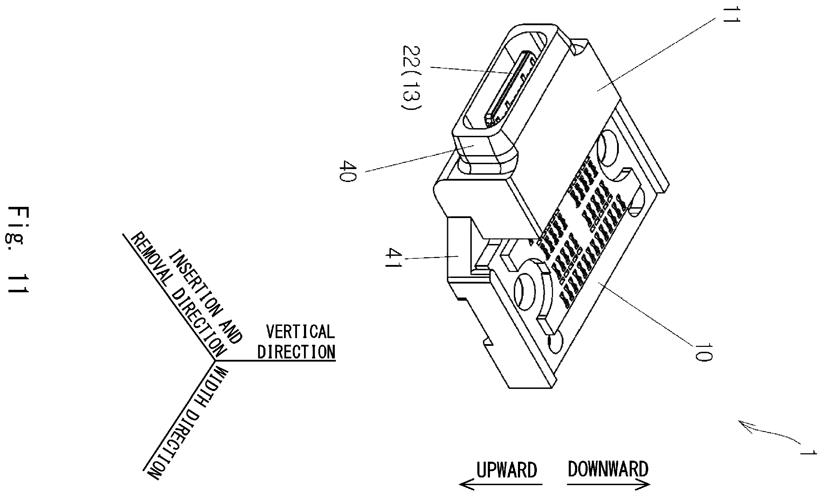

Next, a third embodiment of the present disclosure will be described with reference to Fig. 11. In the following, differences from the first embodiment described above will be mainly explained, and redundant descriptions will be omitted.

In the first embodiment, as shown in Fig. 4, the receptacle connector 13 of the connector module 10 of the repairable connector 1 includes the shell 21.

However, in this embodiment, as shown in Fig. 11, the shell 21 is omitted; accordingly, the functions performed by the shell 21 in the first embodiment are instead performed by the barrel portion 40.

Specifically, in this embodiment, the barrel portion 40 functions to guide the plug connector 6 in the insertion and removal direction; maintain the orientation of the plug connector 6 mated with the receptacle connector 13; and position the plug connector 6 in a plane orthogonal to the insertion and removal direction. Furthermore, when the bracket 11 is made of metal, the barrel portion 40 also functions as an electromagnetic shield.

### (Fourth Embodiment)

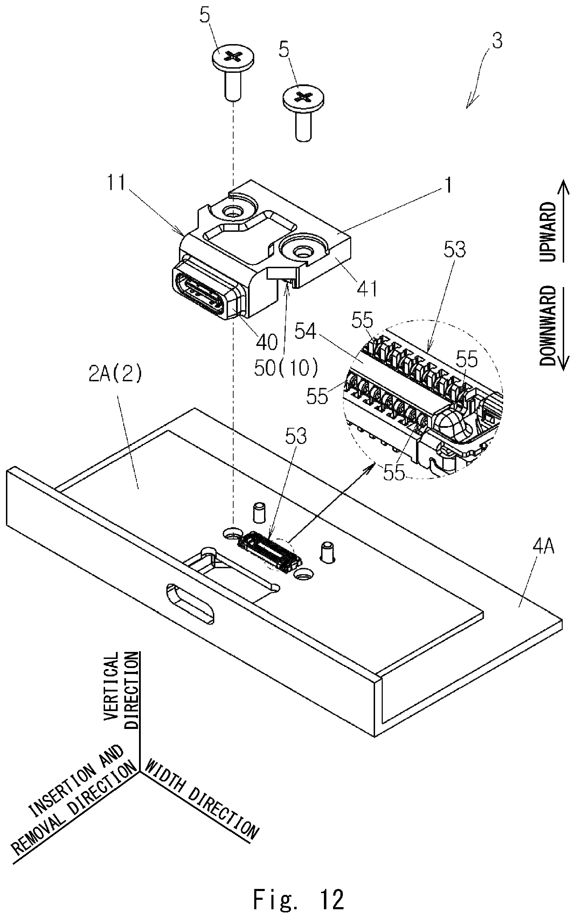

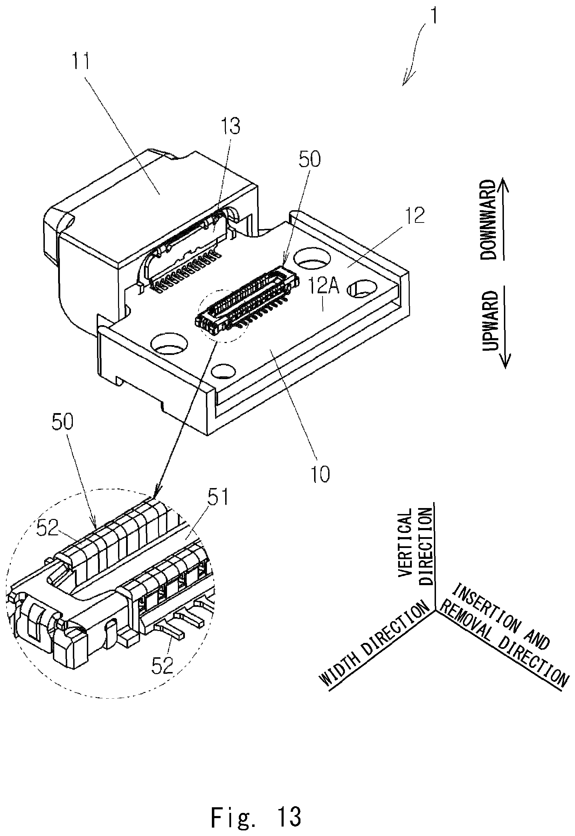

Next, a fourth embodiment of the present disclosure will be described with reference to Figs. 12 and 13. In the following, differences from the first embodiment described above will be mainly explained, and redundant descriptions will be omitted.

In the first embodiment, as shown in Figs. 1, 2, and 6, the connector module 10 includes a board-to-board connector 14 that is surface-mounted on a connector mounting surface 12A of the module substrate 12. The board-to-board connector 14 is a so-called compression-type connector that electrically connects to the internal circuit board 2 by being pressed against the internal circuit board 2.

In contrast, in this embodiment, as shown in Fig. 13, the connector module 10 includes a plug connector 50 surface-mounted on the connector mounting surface 12A of the module substrate 12. The plug connector 50 is a specific example of a board-to-board connector. The plug connector 50 includes a flat plug housing 51 and a plurality of plug contacts 52 held by the plug housing 51. As shown in Fig. 12, the plug connector 50 is mated with a socket connector 53 surface-mounted on the connector mounting surface 2A of the internal circuit board 2, forming a so-called mating-type connector. The socket connector 53 includes a flat socket housing 54 and a plurality of socket contacts 55 held by the socket housing 54. Each socket contact 55 is configured to be elastically deformable in the insertion and removal direction.

As shown in Figs. 12 and 13, the plug connector 50 and the socket connector 53 mate with each other in the vertical direction. The plug connector 50 and the socket connector 53 electrically connect the module substrate 12 and the internal circuit board 2, to which they are respectively mounted, with the two substrates being parallel to each other.

To mount the repairable connector 1 on the connector mounting surface 2A of the internal circuit board 2, the plug connector 50 is first mated with the socket connector 53. Thus, the plurality of plug contacts 52 of the plug connector 50 mechanically and electrically contact the plurality of socket contacts 55 of the socket connector 53. Next, in the mated state of the plug connector 50 and the socket connector 53, the repairable connector 1 is fixed to the internal circuit board 2 by screw fastening as previously described. By fixing the support portion 41 of the bracket 11 to the internal circuit board 2, unintentional removal of the plug connector 50 from the socket connector 53 is prevented, thereby maintaining the mated state of the plug connector 50 and the socket connector 53 with high reliability.

### (Fifth Embodiment)

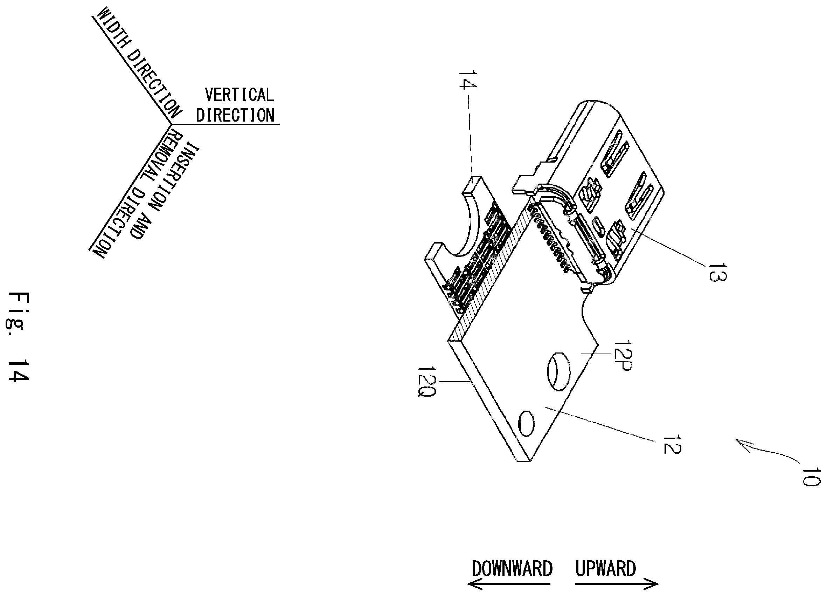

Next, a fifth embodiment of the present disclosure will be described with reference to Fig. 14. In the following, differences from the first embodiment described above will be mainly explained, and redundant descriptions will be omitted. Fig. 14 is a partially cutaway perspective view of the connector module 10.

In the first embodiment, as shown in Fig. 7, the receptacle connector 13 and the board-to-board connector 14 are mounted on the same connector mounting surface 12A of the module substrate 12. In other words, both connectors are mounted on the same surface.

In contrast, in this embodiment, as shown in Fig. 14, the receptacle connector 13 and the board-to-board connector 14 are mounted on opposite surfaces of the module substrate 12. Specifically, the module substrate 12 includes a first connector mounting surface 12P and a second connector mounting surface 12Q opposite to the first connector mounting surface 12P. The first connector mounting surface 12P faces upward, while the second connector mounting surface 12Q faces downward. The receptacle connector 13 is mounted on the first connector mounting surface 12P, and the board-to-board connector 14 is mounted on the second connector mounting surface 12Q.

According to this configuration, in a state in which the repairable connector 1 is mounted on the connector mounting surface 2A of the internal circuit board 2, as shown in Fig. 1, the vertical position of the receptacle connector 13 relative to the connector mounting surface 2A of the internal circuit board 2 is shifted upward compared to the first embodiment. Thus, by arranging the receptacle connector 13 and the board-to-board connector 14 either on the same surface or on opposite surfaces of the module substrate 12, the vertical position of the receptacle connector 13 relative to the connector mounting surface 2A of the internal circuit board 2 can be adjusted.

The first to fifth embodiments can be combined as desirable by one of ordinary skill in the art.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A repairable connector (1) detachably mounted on an internal circuit board (2) disposed within an enclosure (4) of an electronic device (3), the repairable connector (1) comprising:
a connector module (10); and
a bracket (11) mounted on the connector module (10),
wherein the connector module (10) comprises:
a receptacle connector (13) configured to be mated with a plug connector (6) from outside the enclosure (4);
a module substrate (12) on which the receptacle connector (13) is mounted; and
a board-to-board connector (14) electrically connected to the receptacle connector (13) via the module substrate (12) by being mounted on the module substrate (12),
wherein the bracket (11) comprises:
a barrel portion (40) that annularly surrounds the plug connector (6) mated with the receptacle connector (13) to maintain an orientation of the plug connector (6) mated with the receptacle connector (13); and
a support portion (41) integrally formed with the barrel portion (40), the support portion (41) being disposed on a side of the board-to-board connector (14) opposite to the internal circuit board (2) when the repairable connector (1) is mounted on the internal circuit board (2),
wherein the support portion (41) is configured to be fixed to the internal circuit board (2).

2. The repairable connector according to claim 1, wherein the barrel portion is configured to position the plug connector in a plane orthogonal to a mating direction in which the plug connector is mated with the receptacle connector.

3. The repairable connector according to claim 1, wherein the module substrate has a connector mounting surface on which the receptacle connector is mounted, and the board-to-board connector is mounted on the connector mounting surface.

4. The repairable connector according to claim 3, wherein the receptacle connector and the board-to-board connector are mounted on the connector mounting surface of the module substrate so as to be adjacent to each other in a mating direction in which the plug connector is mated with the receptacle connector.

5. The repairable connector according to claim 1, wherein the module substrate has a first connector mounting surface and a second connector mounting surface opposite to the first connector mounting surface, the receptacle connector is mounted on the first connector mounting surface, and the board-to-board connector is mounted on the second connector mounting surface.

6. The repairable connector according to claim 1, wherein the module substrate is a rigid substrate.

7. The repairable connector according to claim 1, wherein the board-to-board connector is configured to electrically connect the module substrate and the internal circuit board in a state in which the module substrate and the internal circuit board are parallel to each other.

8. The repairable connector according to claim 7, wherein the board-to-board connector comprises:
a flat housing; and
a plurality of contacts held by the housing.

9. The repairable connector according to claim 1, wherein the support portion is configured to be detachably fixed to the internal circuit board by screw fastening.

10. The repairable connector according to claim 1, wherein the bracket is made of metal.
